# EUROPEAN PATENT APPLICATION

(11) **EP 2 876 067 A1**
(43) Date of publication of application: **27.05.2015**
(21) Application number: 12881433.2
(22) Date of filing: 20.07.2012
(51) Int. Cl.: B65G 47/90, B25J 13/00

(54) **ROBOT SYSTEM AND ARTICLE TRANSFER METHOD**

(71) Applicant: Kabushiki Kaisha Yaskawa Denki, Kitakyushu-shi, Fukuoka 806-0004 (JP)
(72) Inventor: KOYANAGI, Kenichi, Kitakyushu-shi Fukuoka 806-0004 (JP); MATSUKUMA, Kenji, Kitakyushu-shi Fukuoka 806-0004 (JP); KAWANO, Tomoki, Kitakyushu-shi Fukuoka 806-0004 (JP); AOYAMA, Issei, Kitakyushu-shi Fukuoka 806-0004 (JP)
(74) Representative: Grünecker Patent- und Rechtsanwälte PartG mbB
(86) International application number: PCT/JP2012/068455
(87) International publication number: WO 2014/013607

(57) **Abstract**

A robot system and an article transfer method which can prevent articles that are not transferred by any robot from occurring are provided. A robot system according to an aspect of embodiments includes an information acquisition unit, a plurality of robots, and an information providing unit. The information acquisition unit acquires information related to articles conveyed on a conveyance path. The plurality of robots transfers the articles from the conveyance path. The information providing unit provides information related to transfer target articles to a robot that transfers articles on the immediately downstream side of an acquisition position of the information on the conveyance path, and for a robot that transfers articles on the downstream side of the aforementioned robot, the information providing unit provides information related to articles that are not transferred by a robot on the immediately upstream side of the robot.

## Description

### Field

Embodiments disclosed herein relate to a robot system and an article transfer method.

### Background

Conventionally, there is a technique in which an article conveyed on a conveyance path such as a conveyor is taken out from the conveyance path and transferred to another position by a plurality of robots.

For example, Patent Literature 1 discloses a technique in which a first robot and a second robot are arranged along a conveyance path, and the first robot transfers an article on an upstream side of the conveyance path and the second robot conveys an article on a downstream side of the conveyance path. Further, Patent Literature 1 discloses a technique for distributing articles in advance on the conveyance path to each robot as transfer targets.

### Citation List

### Patent Literature

Patent Literature 1: JP 3834088 B1

### Summary

### Technical Problem

However, the techniques described in Patent Literature 1 have a problem that an article that is not transferred by any robot occurs.

Specifically, if an article that is distributed to the first robot is not transferred by the first robot for some reason, the article is not transferred by the second robot because the article is not distributed to the second robot in advance. As a result, in this case, an article that is not transferred by any robot occurs.

An aspect of embodiments is made in view of the above circumstances and an objective of the aspect is to provide a robot system and an article transfer method that can prevent an article that is not transferred by any robot from occurring.

### Solution to Problem

A robot system according to an aspect of embodiments includes an information acquisition unit, a plurality of robots, and an information providing unit. The information acquisition unit acquires information related to articles conveyed on a conveyance path. The plurality of robots transfers the articles from the conveyance path. The information providing unit provides information related to transfer target articles to a robot that transfers articles on the immediately downstream side of an acquisition position of the information on the conveyance path, and for a robot that transfers articles on the downstream side of the aforementioned robot, the information providing unit provides information related to articles that are not transferred by a robot on the immediately upstream side of the robot.

### Advantageous Effects of Invention

According to an aspect of the embodiments, it is possible to prevent an article that is not transferred by any robot from occurring.

### Brief Description of Drawings

FIG. 1 is an explanatory diagram illustrating a part of a robot system according to a first embodiment.
FIG. 2 is a block diagram illustrating a configuration of the robot system according to the first embodiment.
FIG. 3A is an explanatory diagram illustrating an example of information stored by a storage unit according to the first embodiment.
FIG. 3B is an explanatory diagram illustrating an example of information stored by the storage unit according to the first embodiment.
FIG. 4A is a flowchart illustrating a process performed by an information providing unit according to the first embodiment.
FIG. 4B is a flowchart illustrating a process performed by the information providing unit according to the first embodiment.
FIG. 5A is a block diagram illustrating a configuration of a robot system according to a modified example 1 of the first embodiment.
FIG. 5B is a block diagram illustrating a configuration of a robot system according to a modified example 2 of the first embodiment.
FIG. 6 is a block diagram illustrating a configuration of a robot system according to a second embodiment.
FIG. 7 is an explanatory diagram illustrating an example of information stored by a robot controller according to the second embodiment.
FIG. 8 is a block diagram illustrating a configuration of a robot system according to a third embodiment. Description of Embodiments

Hereinafter, embodiments of the robot system and the article transfer method disclosed by the present application will be described in detail with reference to the accompanying drawings. The present invention is not limited by the embodiments described below.

### First Embodiment

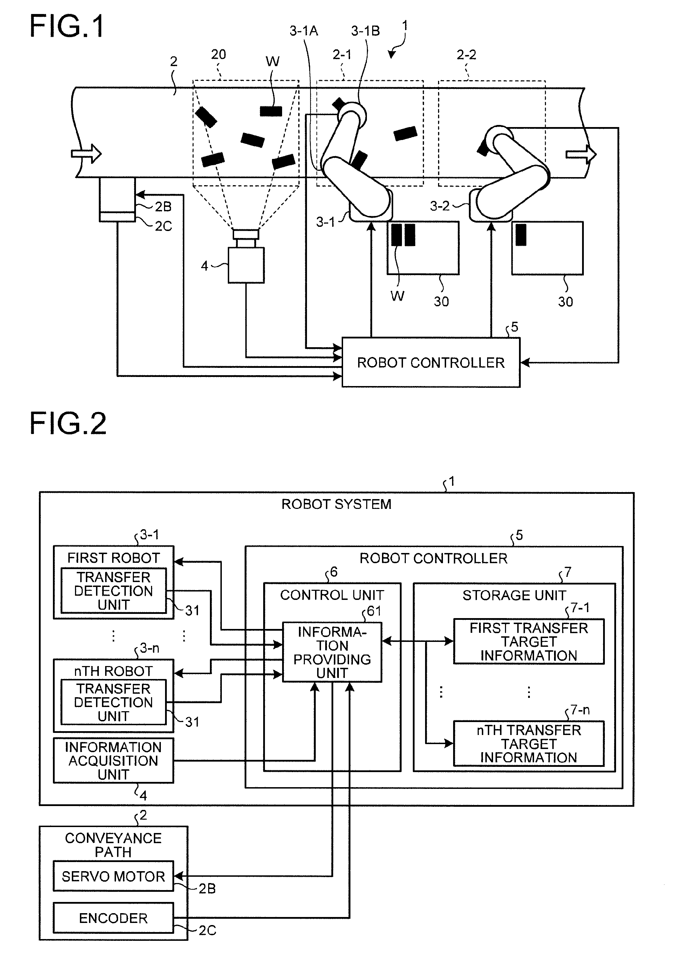

FIG. 1 is an explanatory diagram illustrating a part of a robot system 1 according to a first embodiment. As illustrated in FIG. 1, the robot system 1 is a system that transfers articles W sequentially conveyed on a conveyance path 2 to a predetermined placement table (hereinafter referred to as a "place 30") arranged beside the conveyance path 2.

Here, the conveyance path 2 according to the present embodiment is a conveyor device such as a belt conveyor and a roller conveyor. The conveyor device includes a servo motor 2B that operates the conveyor device and an encoder 2C that detects a rotational position (that is, a conveyance position of the conveyor device) of the servo motor 2B. The servo motor 2B and the encoder 2C are connected to a control device (a robot controller 5 in the present embodiment).

The servo motor 2B operates according to an instruction of the robot controller 5. Thereby, the conveyance path 2 sequentially conveys a plurality of articles W from an upstream side to a downstream side in a conveyance direction indicated by void arrows in FIG. 1. The encoder 2C outputs the rotational position of the servo motor 2B to the robot controller 5.

The conveyance path 2 may convey the articles W at a constant conveyance speed set in advance. The conveyance path 2 is not limited to a conveyor, but may be a shooter or the like which is formed so that a conveyance surface forms a downslope from the upstream side to the downstream side and conveys the articles W from the upstream side to the downstream side.

The robot system 1 includes a plurality of robots 3-1 and 3-2 that take out the article W from the conveyance path 2 and transfer the article W to the place 30. Although, in FIG. 1, two robots 3-1 and 3-2 are illustrated, the robot system 1 includes n robots (n is a natural number) (see FIG. 2).

In the description below, when a specific robot is indicated from among the n robots included in the robot system 1, the robots are referred to as a first robot 3-1, a second robot 3-2, ···, and nth robot 3-n in an order from the robot of which takeout position of the article W on the conveyance path 2 is the most upstream. When a specific robot is not indicated, each robot is simply referred to as a robot.

The robot system 1 further includes an information acquisition unit 4 that acquires information related to the articles W conveyed on the conveyance path 2 and the robot controller 5 that controls operations of the conveyance path 2 and the first robot 3-1 to the nth robot 3-n.

Here, the information acquisition unit 4 is, for example, an image capturing device. The information acquisition unit 4 captures an image of the article W conveyed to an image capturing area 20 defined on the immediately upstream side of a first takeout area 2-1 on the conveyance path 2 from which the first robot 3-1 takes out the article W, and outputs image information of the captured image to the robot controller 5.

The first robot 3-1 includes a single-arm serial link robot arm 3-1A and an end effector 3-1B provided at the tip of the robot arm 3-1A. Here, the end effector 3-1B includes, for example, a sucker which adsorbs and holds an article by applying negative pressure by a vacuum pump and releases the article by releasing the negative pressure. The end effector 3-1B is not limited to a device that adsorbs and holds an article as long as the end effector 3-1B has a mechanism that can hold and convey an article.

The end effector 3-1B is provided with a transfer detection unit 31 (see FIG. 2) that detects whether or not the article W is successfully transferred. The transfer detection unit 31 outputs a transfer result indicating whether or not the article W is successfully transferred to the robot controller 5.

The first robot 3-1 takes out the article W from the first takeout area 2-1 of the conveyance path 2 according to control of the robot controller 5 and transfers the article W to a place 30 provided at a predetermined position.

The second robot 3-2 to the nth robot 3-n (see FIG. 2) have the same configuration as that of the first robot 3-1 and perform the same operation as that of the first robot 3-1. For example, the second robot 3-2 takes out the article W from a second takeout area 2-2 on the immediately downstream side of the first takeout area 2-1 on the conveyance path 2 and transfers the article W to a place 30 provided at a predetermined position.

The transfer detection units 31 of the second robot 3-2 to the nth robot 3-n output a transfer result indicating whether or not the article W is successfully transferred to the robot controller 5 in the same manner as the transfer detection units 31 of the first robot 3-1.

Although FIG. 1 illustrates a case in which the first robot 3-1 and the second robot 3-2 are a serial link robot, the first robot 3-1 to the nth robot 3-n may be a parallel link robot.

The robot controller 5 is a control device that controls operations of the conveyance path 2 and the first robot 3-1 to the nth robot 3-n (see FIG. 2). The robot controller 5 detects two-dimensional positions of the articles W in the image capturing area 20 based on the image information inputted from the information acquisition unit 4.

Further, the robot controller 5 calculates the two-dimensional positions on the conveyance path 2 of the articles W conveyed to the first takeout area 2-1 on the basis of the detected two-dimensional positions of the articles W in the image capturing area 20 and the rotational position of the servo motor 2B inputted from the encoder 2C of the conveyance path 2. Then, the robot controller 5 provides the two-dimensional positions of the articles W conveyed to the first takeout area 2-1 to the first robot 3-1 as information related to the articles W to be transferred.

The robot controller 5 provides information of articles W that are not transferred by a robot on the immediately upstream side to the second robot 3-2 to the nth robot 3-n (see FIG. 2) which transfer the articles W on the downstream side of the first robot 3-1 on the conveyance path 2.

For example, when a transfer result indicating failure of transfer is inputted to the robot controller 5 from the first robot 3-1, the robot controller 5 outputs the two-dimensional positions in the second takeout area 2-2 of the articles W, which the first robot 3-1 fails to transfer, to the second robot 3-2.

Thereby, in the robot system 1, the second robot 3-2 can take out and transfer the articles W, which the first robot 3-1 fails to transfer and which pass through the first takeout area 2-1, from the second takeout area 2-2 on the downstream side of the first takeout area 2-1.

In other words, in the robot system 1, even when any of a plurality of robots arranged along the conveyance path 2 fails to transfer the articles W, the articles W that are not transferred on the upstream side can be transferred by a robot located on the downstream side of the robot which fails to transfer the articles W. Therefore, according to the robot system 1, it is possible to prevent articles W that are not transferred from the conveyance path 2 by any robot from occurring.

Next, a configuration of the robot system 1 will be described with reference to FIG. 2. FIG. 2 is a block diagram illustrating the configuration of the robot system 1 according to the first embodiment. As illustrated in FIG. 2, the robot system 1 includes n robots, which are the first robot 3-1 to the nth robot 3-n, the information acquisition unit 4, and the robot controller 5.

As described above, each of the first robot 3-1 to the nth robot 3-n includes the transfer detection unit 31 that detects a transfer result of the articles W and outputs the transfer result of the articles W to the robot controller 5. The information acquisition unit 4 has already been described, so that the description thereof will be omitted here.

The robot controller 5 includes a control unit 6 and a storage unit 7. The storage unit 7 stores first transfer target information 7-1 to nth transfer target information 7-n. Here, the first transfer target information 7-1 is information related to the transfer targets of the first robot 3-1 and the nth transfer target information 7-n is information related to the transfer targets of the nth robot 3-n.

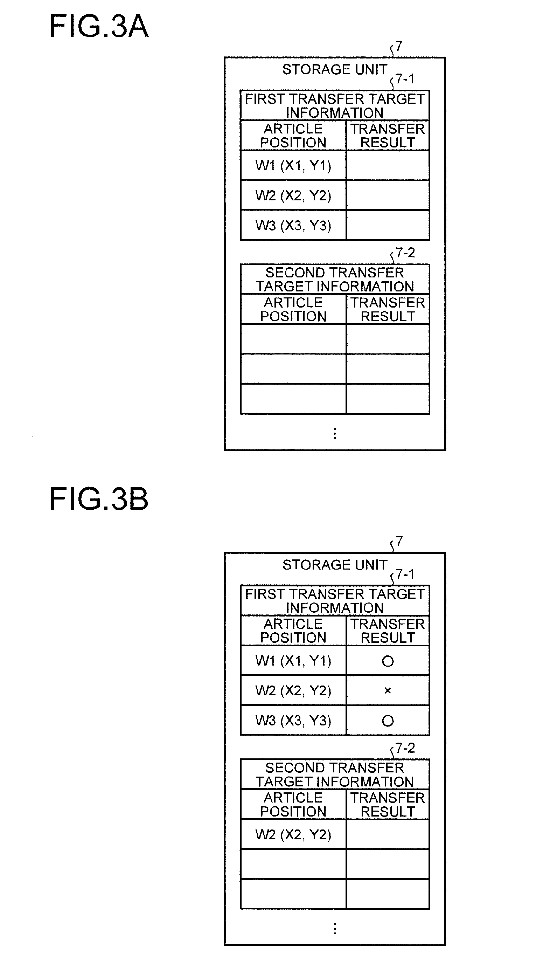

In other words, the storage unit 7 stores transfer target information related to the transfer targets of each robot for each robot included in the robot system 1. A specific example of the information stored by the storage unit 7 will be described later with reference to FIGs. 3A and 3B.

The control unit 6 includes an information providing unit 61 that provides information related to transfer target articles W to the first robot 3-1 to the nth robot 3-n. Although omitted here in FIG. 2, the control unit 6 includes an instruction unit that instructs the first robot 3-1 to the nth robot 3-n to perform various operations in addition to the information providing unit 61.

The information providing unit 61 updates the first transfer target information 7-1 to the nth transfer target information 7-n on the basis of the information inputted from the information acquisition unit 4, the rotational position of the servo motor 2B inputted from the encoder 2C of the conveyance path 2, and the transfer results of articles W inputted from each transfer detection unit 31.

Then, the information providing unit 61 provides information related to the transfer target articles W to the first robot 3-1 to the nth robot 3-n on the basis of the first transfer target information 7-1 to the nth transfer target information 7-n which are sequentially updated. Hereinafter, an example of the operation of the information providing unit 61 will be described with reference to FIGs. 3A and 3B.

FIGs. 3A and 3B are explanatory diagrams illustrating an example of the information stored by the storage unit 7 according to the first embodiment. Here, as an example, a case will be described in which there are three articles W in the image capturing area 20. In the description below, the three articles W are referred to as an article W1, an article W2, and an article W3 to distinguish these articles. When the articles are not distinguished, the articles are simply referred to as an article W.

When image information of a captured image of the article W1, the article W2, and the article W3 is inputted into the information providing unit 61 from the information acquisition unit 4, the information providing unit 61 analyzes the image information and detects the two-dimensional positions of the article W1, the article W2, and the article W3 in the image capturing area 20.

For example, the information providing unit 61 sets an origin at the lower-left corner of the image capturing area 20 illustrated in FIG. 1, sets an X axis from the origin in the conveyance direction of the articles W (direction indicated by void arrows in FIG. 1), and sets a Y axis from the origin in a direction vertically crossing the conveyance path 2.

Then, as illustrated in FIG. 3A, the information providing unit 61 calculates the X coordinate and the Y coordinate of the article W1, the article W2, and the article W3 on the XY coordinate plane set on the image capturing area 20 and stores the X coordinates and the Y coordinates in an area that stores the article positions in the first transfer target information 7-1.

Further, the information providing unit 61 updates the X coordinates of the articles W in the first transfer target information 7-1 based on the time when the images of the article W1, the article W2, and the article W3 are captured by the information acquisition unit 4 and the rotational position of the servo motor 2B inputted from the encoder 2C of the conveyance path 2. At this time, the information providing unit 61 updates the X coordinates of the articles W, for example, every time each robot has transferred the articles W. The X coordinates of the articles W may be updated at any timing, such as at predetermined processing periods (for example, several ms) set in advance.

Thereby, in the area that stores the article positions in the first transfer target information 7-1, the X coordinate and the Y coordinate (hereinafter simply referred to as an "article position") indicating the current position on the conveyance path 2 of the article W1, the article W2, and the article W3 are sequentially updated to the current article position and stored.

Every time the information providing unit 61 updates the article positions of the article W1, the article W2, and the article W3, the information providing unit 61 provides the article positions of the article W1, the article W2, and the article W3 in the updated first transfer target information 7-1 to the first robot 3-1. The first robot 3-1 performs an operation to transfer the article W1, the article W2, and the article W3 from the conveyance path 2 to the place 30 based on the article positions provided from the information providing unit 61.

Thereafter, the transfer detection unit 31 of the first robot 3-1 outputs transfer results indicating whether or not the article W1, the article W2, and the article W3 are successfully transferred to the information providing unit 61. As illustrated in FIG. 3B, the information providing unit 61 stores the transfer results inputted from the transfer detection unit 31 of the first robot 3-1 in an area that stores the transfer results in the first transfer target information 7-1.

Here, as illustrated in FIG. 3B, when the first robot 3-1 successfully transfers the article W1 and the article W3 and fails to transfer the article W2, the information providing unit 61 stores information indicating the article position of the article W2 in an area that stores the article positions in the second transfer target information 7-2. The information providing unit 61 also sequentially updates the article position of the article W2 in the second transfer target information 7-2 to current article positions based on the rotational position of the servo motor 2B inputted from the encoder 2C of the conveyance path 2.

Then, the information providing unit 61 provides the article position of the article W2 to the second robot 3-2 based on the second transfer target information 7-2. The second robot 3-2 performs an operation to transfer the article W2 from the conveyance path 2 to the place 30 based on the article position of the article W2 provided from the information providing unit 61.

Thereby, the article W2 which the first robot 3-1 fails to transfer is transferred from the conveyance path 2 to the place 30 by the second robot 3-2, so that it is possible to prevent an article W that is not transferred by any robot from occurring in the robot system 1.

Further, when the second robot 3-2 to the nth robot 3-n fail to transfer an article W, the information providing unit 61 performs the same process as that performed when the first robot 3-1 fails to transfer an article W, so that the information providing unit 61 prevents an article W that is not transferred by any robot from occurring.

In other words, when a certain robot fails to transfer an article W, the information providing unit 61 provides the article position of the article W which the robot fails to transfer to a robot that transfers articles W on the immediately downstream side of the robot that fails to transfer the article W on the immediately upstream side. Thereby, in the robot system 1, it is possible to prevent an article W that is not transferred by any robot from occurring.

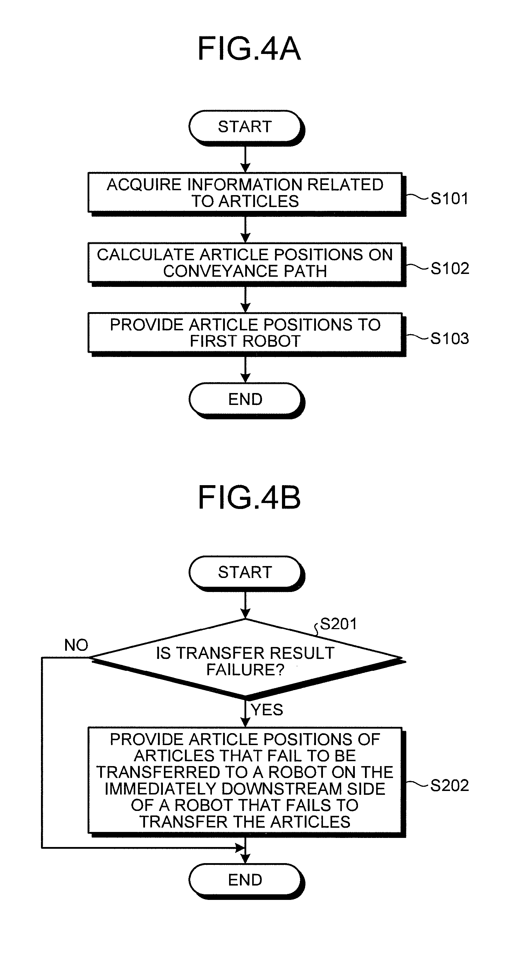

Next, a process performed by the information providing unit 61 will be described with reference to FIGs. 4A and 4B. FIGs. 4A and 4B are flowcharts illustrating processes performed by the information providing unit 61 according to the first embodiment.

Every time the image information of a captured image that is captured at a predetermined cycle by the information acquisition unit 4 is inputted into the information providing unit 61, the information providing unit 61 performs the process illustrated in FIG. 4A. Specifically, when the image information is inputted into the information providing unit 61 from the information acquisition unit 4, as illustrated in FIG. 4A, the information providing unit 61 acquires the image information as information related to the articles W (step S101).

Subsequently, the information providing unit 61 calculates the article positions of the articles W on the surface of the conveyance path 2 from the image information acquired in step S101 and the rotational position of the servo motor 2B inputted from the encoder 2C of the conveyance path 2 (step S102). Then, the information providing unit 61 provides the calculated article positions to the first robot 3-1 (step S103) and ends the process.

Every time a transfer result of the articles W is inputted into the information providing unit 61 from any robot of the first robot 3-1 to the nth robot 3-n, the information providing unit 61 performs the process illustrated in FIG. 4B. Specifically, when a transfer result of the articles W is inputted into the information providing unit 61 from any robot, as illustrated in FIG. 4B, the information providing unit 61 determines whether or not the inputted transfer result is a failure (step S201). The information providing unit 61 stores the determination result of the transfer result in the storage unit 7.

When the transfer result is a failure (step S201, Yes), the information providing unit 61 provides the article positions of the articles W which a robot on the immediately upstream side fails to transfer to a robot that transfers the articles W on the immediately downstream side of the robot that fails to transfer the articles W (step S202). On the other hand, when the transfer result is a success (step S201, No), the information providing unit 61 ends the process.

As described above, the robot system according to the first embodiment includes the information acquisition unit, a plurality of robots, and the information providing unit. The information acquisition unit acquires information related to the articles conveyed on the conveyance path. The plurality of robots transfers the articles from the conveyance path.

The information providing unit provides information related to transfer target articles to a robot that transfers articles on the immediately downstream side of the acquisition position of the information on the conveyance path, and for a robot that transfers articles on the downstream side of the aforementioned robot, the information providing unit provides information related to articles that are not transferred by a robot on the immediately upstream side of the robot. Thereby, according to the first embodiment, it is possible to provide a robot system and an article transfer method which can prevent articles that are not transferred by any robot from occurring.

Although a case has been described in which information related to all the conveyed articles W is provided to the first robot 3-1 that transfers the articles W from immediately downstream side of the image capturing area 20 in the conveyance path 2, information related to a part of the articles W may be provided.

For example, the information providing unit 61 may provide, to the first robot 3-1, the article positions of a part of all the articles W that are conveyed to the first takeout area 2-1 and may distribute and provide the article positions of the remaining articles W to the second robot 3-2 to the nth robot 3-n in advance.

When any of the first robot 3-1 to the nth robot 3-n to which the article positions are provided fails to transfer the articles W, the information providing unit 61 provides the article positions of the articles W which the robot on the immediately upstream side fails to transfer to a robot that transfers articles W on the immediately downstream side of the robot that fails to transfer the articles W.

By distributing the article positions of the transfer target articles W to a plurality of robots in advance in this way, it is possible to reduce the number of articles W which each robot fails to transfer. Thereby, it is possible to reduce the amount of processing performed by the information providing unit 61 when a robot fails to transfer the articles W.

In the present embodiment, whether or not the articles W are transferred by each robot is determined based on the transfer result outputted from the transfer detection unit 31 of each robot. However, the method of determining whether or not the articles W are transferred by each robot is not limited to this.

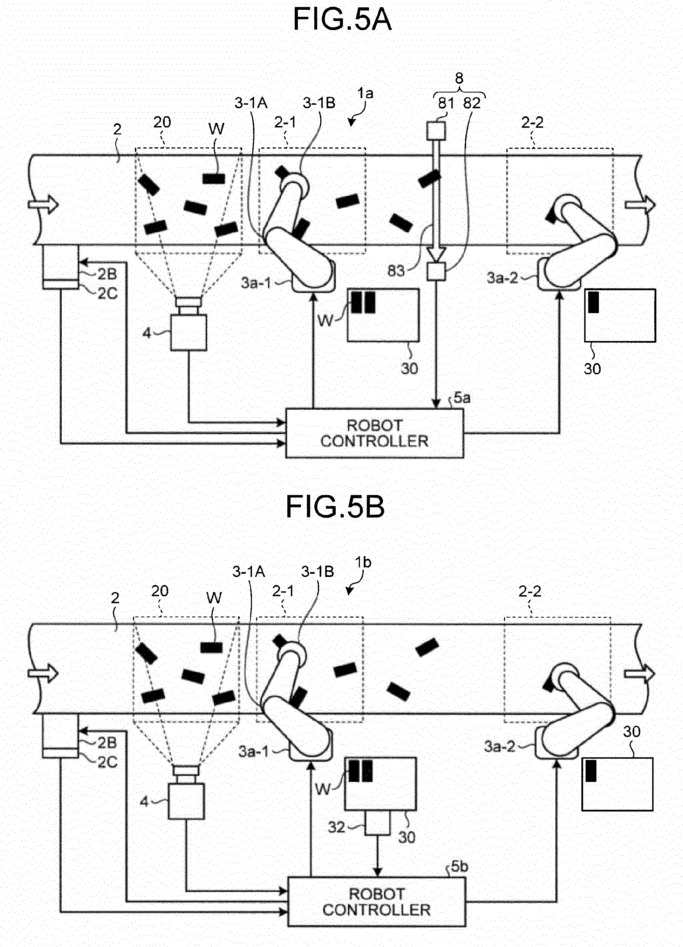

Here, modified examples of the method of determining whether or not the articles W are transferred by each robot will be described with reference to FIGs. 5A and 5B. FIG. 5A is a block diagram illustrating a configuration of a robot system 1a according to a modified example 1 of the first embodiment, and FIG. 5B is a block diagram illustrating a configuration of a robot system 1b according to a modified example 2 of the first embodiment.

Here, among components of the robot systems 1a and 1b, the same components as those of the robot system 1 illustrated in FIG. 1 are denoted by the same reference numerals as those in FIG. 1 and the description thereof will be omitted.

In the description below, the robot systems 1a and 1b which include two robots will be described as an example. However, the number of robots included in each of the robot systems 1a and 1b may be three or more.

First, the robot system 1a according to the modified example 1 will be described with reference to FIG. 5A. As illustrated in FIG. 5A, the robot system 1a includes a detection unit 8 that detects articles W passing through an area between the first takeout area 2-1 and the second takeout area 2-2 and detects the articles W that are not transferred by a first robot 3a-1 by the detection unit 8.

The first robot 3a-1 and a second robot 3a-2 in the robot system 1a have the same configuration as that of the first robot 3-1 and the second robot 3-2 illustrated in FIG. 1 except that the first robot 3a-1 and the second robot 3a-2 do not include the transfer detection unit 31 (see FIG. 2).

Here, the detection unit 8 is, for example, an infrared sensor which includes a light emitting unit 81 and a light receiving unit 82 provided at positions opposite to each other with the conveyance path 2 in between and detects passing of an article W by determining whether or not infrared light 83 emitted from the light emitting unit 81 is received by the light receiving unit 82.

When the infrared light 83 is blocked by an article W conveyed on the conveyance path 2 and the infrared light 83 is not received by the light receiving unit 82, the detection unit 8 detects passing of the article W between the first takeout area 2-1 and the second takeout area 2-2. When the detection unit 8 detects passing of the article W, the detection unit 8 outputs the detection result to a robot controller 5a.

The robot controller 5a calculates the article positions on the conveyance path 2 based on the image information inputted from the information acquisition unit 4 and the rotational position of the servo motor 2B inputted from the encoder 2C of the conveyance path 2. Then, the robot controller 5a provides the calculated article positions to the first robot 3a-1 as information related to the transfer target articles W.

Thereafter, if a detection result indicating that an article W passes through an area between the first takeout area 2-1 and the second takeout area 2-2 is inputted into the robot controller 5a from the detection unit 8, the robot controller 5a provides the article position on the conveyance path 2 of the article W that has passed through the area to the second robot 3a-2.

Thereby, in the robot system 1a, the article W that is not transferred from the first takeout area 2-1 by the first robot 3a-1 can be transferred from the second takeout area 2-2 to the place 30 by the second robot 3a-2. As a result, according to the robot system 1a, it is possible to prevent an article W that is not transferred by any robot from occurring.

The detection unit 8 in the modified example 1 is not limited to an infrared sensor. For example, the detection unit 8 may be an image capturing device that captures an image of an article W conveyed between the first takeout area 2-1 and the second takeout area 2-2.

When an image capturing device is used as the detection unit 8, the robot controller 5a detects the current position on the conveyance path 2 of an article W conveyed between the first takeout area 2-1 and the second takeout area 2-2 based on an captured image that is captured by the detection unit 8 and the rotational position of the servo motor 2B inputted from the encoder 2C of the conveyance path 2, and provides the detected current position to the second robot 3a-2.

According to this configuration, for example, even when a position of an article W which the first robot 3a-1 fails to transfer is largely shifted from a holding position of the article W held by the first robot 3a-1, it is possible to provide an accurate article position of the article W on the conveyance path 2 to the second robot 3a-2.

When the robot system 1a includes three or more robots, the detection unit 8 that detects an article W passing through an area between the takeout areas on the conveyance path 2 from which each robot takes out articles W is provided for each area.

When any of the detection units 8 detects passing of an article W, the robot controller 5a provides the article position of the article W of which passing is detected to a robot that transfers articles W on the immediately downstream side of the takeout area where the passing of the article W is detected. Thereby, in the robot system 1a, it is possible to prevent an article W that is not transferred by any robot from occurring without providing the transfer detection unit 31 (see FIG. 2) to each robot.

Further, according to this configuration, it is possible to obtain the same effect as that of the robot system 1a by, for example, only providing the detection unit 8 to an existing robot system where articles are transferred from a conveyance path by robots that do not include the transfer detection unit 31 (see FIG. 2) and changing control content of a robot controller.

Next, the robot system 1b according to a modified example 2 will be described with reference to FIG. 5B. As illustrated in FIG. 5B, the robot system 1b includes a detection unit 32 that detects the number of articles W transferred to each place 30.

As the detection unit 32, for example, it is possible to use a weight sensor that detects the number of articles W based on a total weight of the articles W transferred to the place 30 or pressure sensors that are provided at each placement position of the article W in the place 30 and detect placement of the articles W. The detection unit 32 outputs the detected number of the articles W to the controller 5b.

The first robot 3a-1 and the second robot 3a-2 in the robot system 1b are robots in which the transfer detection unit 31 (see FIG. 2) is not provided in the same manner as in the modified example 1.

The robot controller 5b calculates the article positions on the conveyance path 2 based on the image information inputted from the information acquisition unit 4 and the rotational position of the servo motor 2B inputted from the encoder 2C of the conveyance path 2. Then, the robot controller 5b provides the calculated article positions to the first robot 3a-1 as information related to the transfer target articles W.

Thereafter, the robot controller 5b determines the articles W that are not transferred by the first robot 3a-1 based on the article positions provided to the first robot 3a-1 and the number of articles W inputted from the detection unit 32.

Specifically, the robot controller 5b estimates the articles W that are supposed to be transferred to the place 30 by the first robot 3a-1 and the number of articles W transferred to the place 30 based on the article positions.

Specifically, when the estimated number of articles W is smaller than the number of articles W that are actually transferred to the place 30, the robot controller 5b determines that the articles W that are supposed to be transferred are not transferred by the first robot 3a-1. Then, the robot controller 5b provides the article positions of articles W that are determined not to be transferred by the first robot 3a-1 to the second robot 3a-2.

Thereby, in the robot system 1b, the articles W that are not transferred from the first takeout area 2-1 by the first robot 3a-1 can be transferred from the second takeout area 2-2 to the place 30 by the second robot 3a-2.

As a result, according to the robot system 1b, it is possible to prevent articles W that are not transferred by any robot from occurring. When the robot system 1b includes three or more robots, the detection unit 32 is provided to each place 30 that is provided for each robot.

When the robot controller 5b determines that the articles W that are supposed to be transferred to the place 30 are not transferred, the robot controller 5b provides the article positions of the articles W that are not transferred to the place 30 to a robot that transfers articles W on the immediately downstream side of the robot that does not transfer the articles W that are supposed to be transferred. Thereby, in the robot system 1b, it is possible to prevent articles W that are not transferred by any robot from occurring without providing the transfer detection unit 31 (see FIG. 2) to each robot.

Further, according to this configuration, it is possible to obtain the same effect as that of the robot system 1b by, for example, only providing the detection units 32 to an existing robot system where articles are transferred from a conveyance path by robots that do not include the transfer detection unit 31 (see FIG. 2) and changing control content of a robot controller.

### Second Embodiment

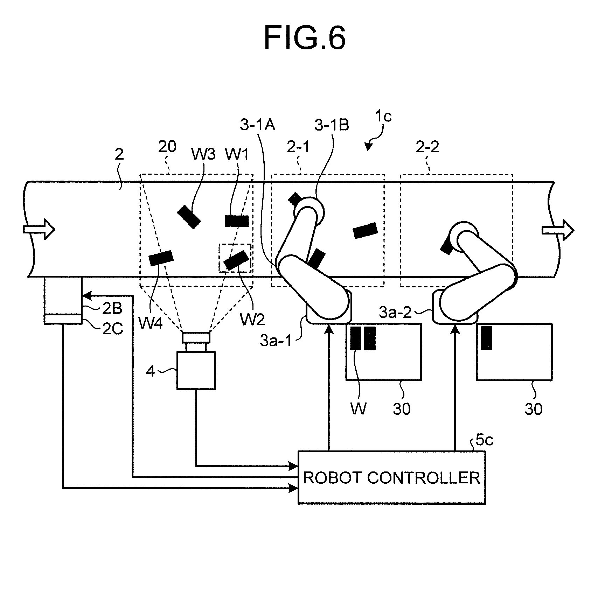

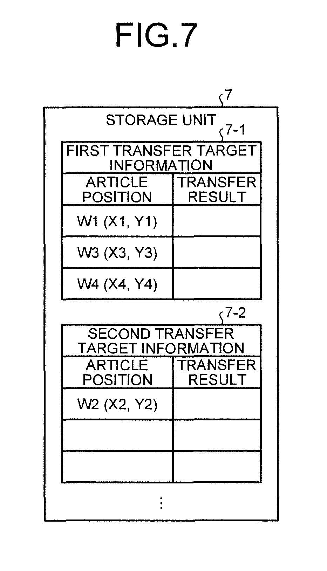

Next, a robot system 1c according to a second embodiment will be described with reference to FIGs. 6 and 7. FIG. 6 is a block diagram illustrating a configuration of a robot system 1c according to the second embodiment, and FIG. 7 is an explanatory diagram illustrating an example of information stored by a robot controller 5c according to the second embodiment.

Here, among components of the robot system 1c, the same components as those of the robot system 1 illustrated in FIGs. 1 and 2 or the robot system 1a illustrated in FIG. 5A are denoted by the same reference numerals as those in FIGs. 1 and 2 or FIG. 5A and the description thereof will be omitted. In the description below, the robot system 1c including two robots will be described as an example. However, the number of robots included in each robot system 1c may be three or more.

The robot system 1c illustrated in FIG. 6 is different from the robot systems 1, 1a, and 1b according to the first embodiment, which determine the articles W that are not transferred by a robot after the transfer is tried, in that the robot system 1c determines the articles W that are not transferred by a robot before the transfer is tried. In the robot system 1c, the robot controller 5c determines in advance an article W2 that may not be transferred by the first robot 3a-1 based on the image information captured by the information acquisition unit 4.

For example, as illustrated in FIG. 6, when four articles W1 to W4 are conveyed to the image capturing area 20, the article W1 and the article W2 may be aligned in a direction perpendicular to the conveyance direction (direction indicated by void arrows in FIG. 6).

In this case, the article W1 and the article W2 pass through the first takeout area 2-1 at substantially the same time, so that either one may not be transferred by the first robot 3a-1. Therefore, before the article W1 and the article W2 are transferred to the first takeout area 2-1, the robot controller 5c determines in advance that either one of the article W1 and the article W2 (here, the article W2) is not transferred by the first robot 3a-1.

Subsequently, as illustrated in FIG. 7, the robot controller 5c stores the article positions of the article W1, the article W3, and the article W4 into an area in which the article positions are stored in the first transfer target information 7-1 in the storage unit 7. On the other hand, the robot controller 5c stores the article position of the article W2 into an area in which the article positions are stored in the second transfer target information 7-2.

The article positions in the first transfer target information 7-1 or the second transfer target information 7-2 are sequentially updated to the current article positions by the robot controller 5c based on the rotational position of the servo motor 2B inputted from the encoder 2C of the conveyance path 2.

Then, the robot controller 5c provides in advance the article positions of the article W1, the article W3, and the article W4 in the first transfer target information 7-1 to the first robot 3a-1 and provides in advance the article position of the article W2 in the second transfer target information 7-2 to the second robot 3a-2.

Thereby, in the robot system 1c, even when the conveyance speed of the articles W1 to W4 conveyed by the conveyance path 2 is increased, the article W2 can be transferred to the place 30 from the second takeout area 2-2 by the second robot 3a-2 which is provided with the article position of the article W2 in advance.

Thereby, according to the robot system 1c, when the conveyance speed of the articles W conveyed by the conveyance path 2 is increased, it is possible to improve transfer efficiency of the articles W while preventing an article W that is not transferred by any robot from occurring.

When the robot system 1c includes three or more robots, the robot controller 5c also distributes and provides the article positions of articles W that are highly probable not to be transferred by the first robot 3a-1 to a plurality of robots other than the second robot 3a-2.

Thereby, in the robot system 1c, even when the conveyance speed of the articles W conveyed by the conveyance path 2 is further increased and the number of articles W that are determined not to be transferred by the firs robot 3a-1 is increased, it is possible to prevent articles W that are not transferred by any robot from occurring.

As described above, the robot system according to the second embodiment can prevent articles that are not transferred by any robot from occurring even when the conveyance speed of the articles conveyed by the conveyance path is increased, so that it is possible to improve the transfer efficiency of the articles.

Functions described in the aforementioned first embodiment, modified example 1, and modified example 2 may be added to the robot system 1c. In other words, the function to determine the articles W that are not transferred by each robot after the transfer is tried and provide information related to the articles W that are not transferred by a robot on the immediately upstream side to a robot on the immediately downstream side may be added to the robot system 1c. Thereby, it is possible to more reliably prevent articles W that are not transferred by any robot from occurring.

### Third Embodiment

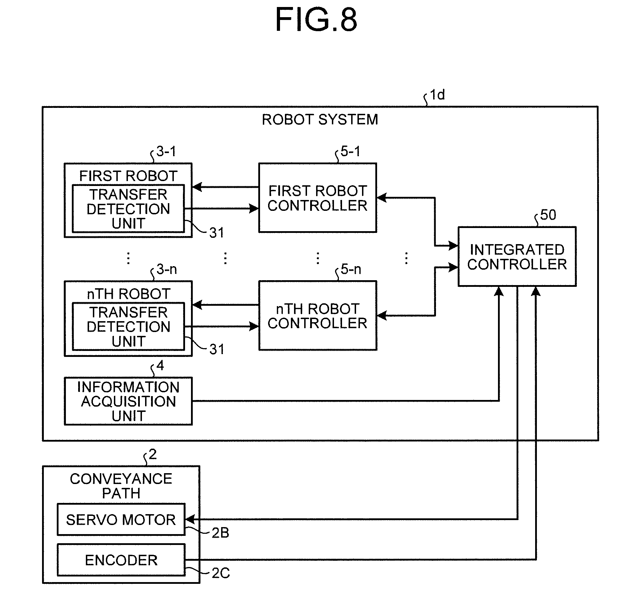

Next, a robot system 1d according to a third embodiment will be described with reference to FIG. 8. FIG. 8 is a block diagram illustrating a configuration of the robot system 1d according to the third embodiment. Here, among components of the robot system 1d, the same components as those of the robot system 1 illustrated in FIG. 2 are denoted by the same reference numerals as those in FIG. 2 and the description thereof will be omitted.

The robot system 1d illustrated in FIG. 8 includes n robot controllers (here, a first robot controller 5-1 to an nth robot controller 5-n), each of which is connected to each of the first robot 3-1 to the nth robot 3-n, respectively.

The first robot controller 5-1 to the nth robot controller 5-n function as instruction units that issue various operation instructions to the first robot 3-1 to the nth robot 3-n, respectively.

Further, the robot system 1d includes an integrated controller 50 connected to the first robot controller 5-1 to the nth robot controller 5-n and the information acquisition unit 4. The integrated controller 50 has the same function as that of the information providing unit 61 illustrated in FIG. 2 in the robot system 1d.

The integrated controller 50 calculates the article positions based on the image information inputted from the information acquisition unit 4 and the rotational position of the servo motor 2B inputted from the encoder 2C of the conveyance path 2, and distributes and provides the calculated article positions to the first robot 3-1 or the first robot 3-1 to the nth robot 3-n.

Thereafter, the integrated controller 50 determines whether or not any of the first robot 3-1 to the nth robot 3-n fails to transfer the articles W on the basis of the transfer results acquired from the transfer detection units 31 through the first robot controller 5-1 to the nth robot controller 5-n.

When any of the first robot 3-1 to the nth robot 3-n fails to transfer the articles W, the integrated controller 50 provides the article positions of the articles W which the robot on the immediately upstream side fails to transfer to a robot that transfers articles W on the immediately downstream side of the robot that fails to transfer the articles W. Thereby, in the robot system 1d, it is possible to prevent articles W that are not transferred by any robot from occurring.

Further, in the robot system 1d, it is possible to decentralize the function of the robot controller 5 illustrated in FIG. 2 to the first robot controller 5-1 to the nth robot controller 5-n and the integrated controller 50.

Therefore, according to the robot system 1d, it is possible to use an inexpensive controller having a processing capacity lower than that of the robot controller 5 illustrated in FIG. 2 as the first robot controller 5-1 to the nth robot controller 5-n and the integrated controller 50.

Further, according to the robot system 1d, it is possible to add a robot by only adding the robot and a robot controller that issues operation instructions to the robot without largely changing the control content of the integrated controller 50. Therefore, according to the robot system 1d, it is possible to easily add robots and further improve transfer efficiency of the articles W.

As described above, according to the third embodiment, robots can be easily added, so that it is possible to realize a robot system that can prevent articles that are not transferred by any robot from occurring at lower cost.

In the same manner, also in the robot systems 1a, 1b, and 1c illustrated in FIGs. 5A, 5B, and 6, a robot controller may be provided to each of the first robot 3a-1 and the second robot 3a-2 and the integrated controller 50 may be provided as a higher-level device of the robot controllers.

When the conveyance path is not controlled by the robot controller or the integrated controller and the conveyance speed of the articles W is constant, the robot controller or the integrated controller may update the article positions on the conveyance path on the basis of the conveyance speed of the articles conveyed by the conveyance path.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

### Reference Signs List

- 1, 1a, 1b, 1c, 1d: Robot system
- 2: Conveyance path
- 2B: Servo motor
- 2C: Encoder
- 20: Image capturing area
- 2-1: First takeout area
- 2-2: Second takeout area
- 3-1, 3a-1: First robot
- 3-1A: Robot arm
- 3-1B: End effector
- 3-2, 3a-2: Second robot
- 3-n: nth robot
- 30: Place
- 31: Transfer detection unit
- 4: Information acquisition unit
- 5, 5a, 5b, 5c: Robot controller
- 50: Integrated controller
- 5-1: First robot controller
- 5-n: nth robot controller
- 6: Control unit
- 61: Information providing unit
- 7: Storage unit
- 7-1: First transfer target information
- 7-2: Second transfer target information
- 8, 32: Detection unit
- 81: Light emitting unit
- 82: Light receiving unit
- 80: Infrared light
- W, W1 to W4: Article

## Claims

1. A robot system comprising:
an information acquisition unit that acquires information related to articles conveyed on a conveyance path;
a plurality of robots that transfer the articles from the conveyance path; and
an information providing unit that provides the information related to transfer target articles to the robot that transfers articles on an immediately downstream side of an acquisition position of the information on the conveyance path, and provides the information related to articles that are not transferred by the robot on an immediately upstream side to the robot that transfers articles on a downstream side of the robot that transfers articles on the immediately downstream side of the acquisition position of the information.

2. The robot system according to claim 1, wherein
the information providing unit provides the information related to all conveyed articles to the robot that transfers articles on the immediately downstream side of the acquisition position of the information.

3. The robot system according to claim 1, wherein
the information providing unit provides the information related to a part of articles of all conveyed articles to the robot that transfers articles on the immediately downstream side of the acquisition position of the information.

4. The robot system according to any one of claims 1 to 3, wherein
when articles supposed to be transferred by the robot on the immediately upstream side are not transferred by the robot, the information providing unit provides the information related to the articles that are not transferred by the robot on the immediately upstream side to the robot that transfers articles on the immediately downstream side of the above robot.

5. The robot system according to any one of claims 1 to 4, wherein
before the robot that transfers articles on the immediately downstream side of the acquisition position of the information transfers articles, the information providing unit determines articles that are not transferred by the robot on the basis of the information and provides the information related to the articles to the robot that transfers articles on the immediately downstream side of the above robot.

6. An article transfer method comprising:
acquiring information related to articles conveyed on a conveyance path by an information acquisition unit;
transferring the articles from the conveyance path by a plurality of robots; and
providing the information related to transfer target articles to the robot that transfers articles on an immediately downstream side of an acquisition position of the information on the conveyance path by an information providing unit, and providing the information related to articles that are not transferred by the robot on an immediately upstream side to the robot that transfers articles on a downstream side of the robot that transfers articles on the immediately downstream side of the acquisition position of the information by the information providing unit.
